# EUROPÄISCHE PATENTSCHRIFT

(11) **EP 0 928 553 B1**
(45) Veröffentlichungstag und Bekanntmachung des Hinweises auf die Patenterteilung: **01.03.2006**
(21) Anmeldenummer: 98122734.1
(22) Anmeldetag: 30.11.1998
(51) Int. Cl.: A01B 49/06

(54) **Landwirtschaftliche Bestellkombination**
Agricultural applying combine
Machine agricole d'application combinée

(30) Priorität: 19.12.1997 DE 19756720; 28.01.1998 DE 19803199
(43) Veröffentlichungstag der Anmeldung: 14.07.1999
(73) Patentinhaber: Amazonen-Werke H. Dreyer GmbH & Co. KG, 49205 Hasbergen (DE)
(72) Erfinder: Dreyer, Heinz Dr. Dipl.-Ing., 49205 Hasbergen (DE); Higgen, Reinhard Dipl.-Ing., 27798 Hude (DE); Wiemeyer, Benno Dipl.-Ing., 49504 Lotte-Halen (DE)

(56) Entgegenhaltungen:
- EP-A- 0 704 147
- WO-A-90/07865
- DE-U- 9 312 364
- FR-A- 1 597 138
- FR-A- 2 687 622
- FR-A- 2 708 537
- GB-A- 2 246 498
- GB-A- 2 272 353
- US-A- 3 958 520
- US-A- 4 048 929

## Beschreibung

Die Erfindung betrifft eine landwirtschaftliche Bestellkombination gemäß des Oberbegriffes des Patentanspruches 1.

Eine derartige Bestellkombination ist beispielsweise durch die DE-OS 25 28 930 bekannt. Bei dieser Bestellkombination ist die Bodenwalze vor den Laufrädern der Bestellkombination angeordnet. Mittels des zwischen dem Rahmen und der Bodenwalze angeordneten Hubzylinders können die Laufräder während der Bestellarbeit vom Boden abgehoben werden. Das Abheben der Laufräder vom Boden ist jedoch in vielen Fällen nicht wünschenswert. Wenn die Laufräder den Boden berühren, hinterlassen sie Spurrillen.

Der Erfindung liegt die Aufgabe zugrunde, bei einer Bestellkombination, bei der die Laufräder des Tragrahmens sich auf der Bodenoberfläche abstützen, Abhilfe dahingehend zu schaffen, daß von der Bodenwalze eine gleichmäßige Bodenverdichtung auf dem zu bestellenden Feld erreicht wird.

Diese Aufgabe wird erfindungsgemäß durch die kennzeichnenden Merkmale des Anspruches 1 gelöst.

Hierdurch wirkt sich nicht in irgendeiner Weise nachteilig aus, daß durch die Entnahme von Material aus den Vorratsbehälter entnommene Material sich das Gewicht ändert.

Um ein einfach aufgebautes Regelsystem zur gleichmäßigen Belastung der Laufräder sicherzustellen, sind die kennzeichnenden Maßnahmen des Anspruches 2 vorgesehen.

Weitere Einzelheiten der Erfindung sind der Beispielsbeschreibung und den Zeichnungen zu entnehmen. Hierbei zeigen
- Fig.1: die Bestellkombination in Seitenansicht und Prinzipdarstellung,
- Fig.2: eine weitere Bestellkombination in Seitenansicht und Prinzipdarstellung,
- Fig.3: eine weitere Bestellkombination in Seitenansicht und in Prinzipdarstellung,

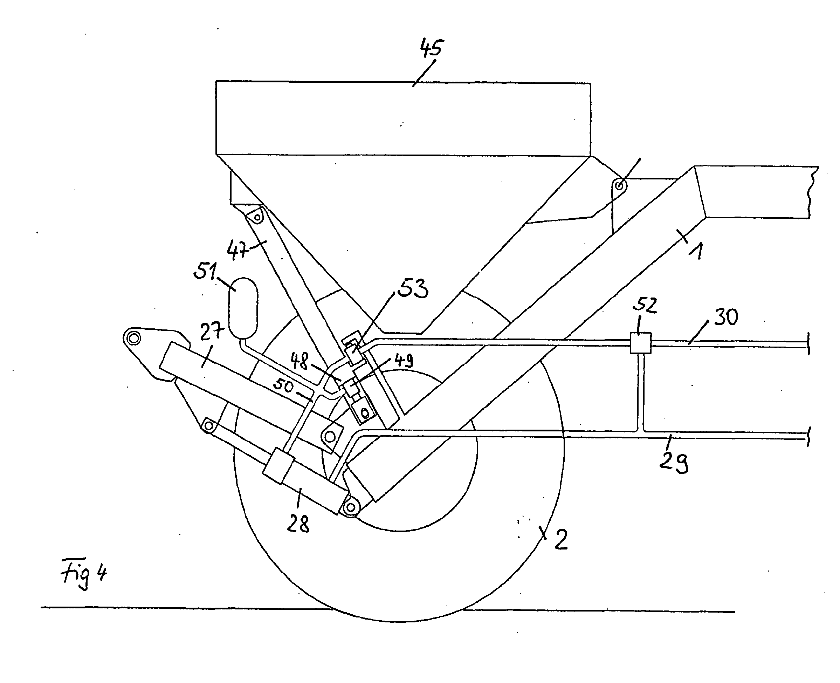

- Fig.4: die Anordnung und Ausbildung der hydraulischen Wiegeeinrichtung der Bestellkombination in vergrößertem Maßstab und in Prinzipdarstellung und

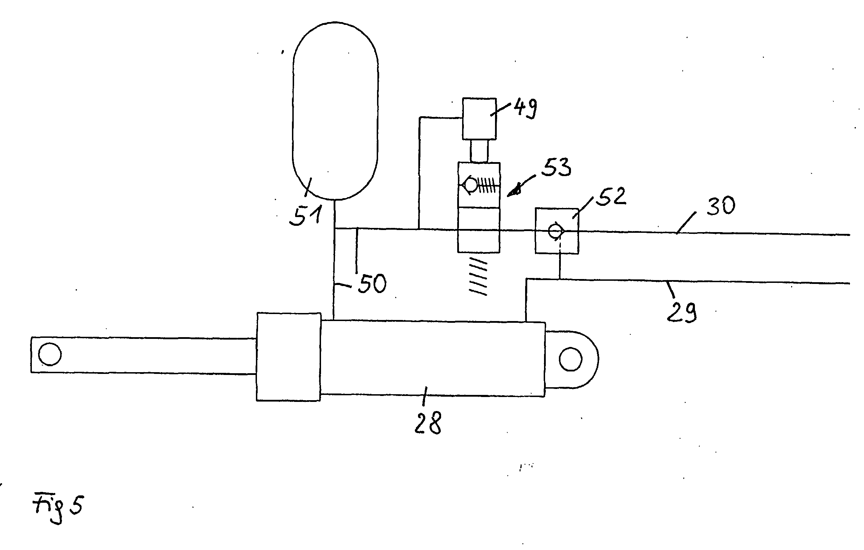

- Fig.5: den Hydraulikschaltplan der Wiegeeinrichtung.

Die Bestellkombination weist den Tragrahmen 1 mit dem Fahrwerk 2 und der Zugdeichsel 3 auf. Im vorderen Bereich des Tragrahmens 1 ist der Dreipunktkraftheber 4 angeordnet. Der Dreipunktkraftheber 4 ist als parallelogrammartige Halterung ausgebildet. Der Dreipunktkraftheber 4 weist die beiden unteren Lenker 5 sowie den Oberlenker 6 auf. Die Unterlenker 5 sind über das Gelenk 7 nach vorn verlängert. Die Vorderseiten der unteren Lenker 5 sind mit einem Verbindungsbalken miteinander verbunden. An diesem Verbindungsbalken greift der Hydraulikzylinder 8 an. Der Hydraulikzylinder 8 stützt sich am Rahmen9 des Dreipunktkrafthebers 4, der an dem Tragrahmen 1 befestigt ist, ab. An dem Dreipunktkraftheber 4 ist das Bodenbearbeitungsgerät 10 mit der Nachlaufwalze 11 angeordnet. Die Nachlaufwalze 11 ist gegenüber dem Bodenbearbeitungsgerät 10 über die Höhenverstellungseinrichtung 12 in der Höhenlage gegenüber dem Bodenbearbeitungsgerät 10 einstellbar, so daß die Bodenwalze 11 die Eindringtiefe der Bodenbearbeitungswerkzeuge 13 des Bodenbearbeitungsgerätes 10 in den Boden 14 bestimmt. Die Bodenbearbeitungswerkzeuge 13 sind in drei Querreihen hintereinander angeordnet. Vor den Bodenbearbeitungswerkzeugen 13 ist ein in Höhenrichtung verstellbarer Planierbalken 15, der sich über die Arbeitsbreite des Bodenbearbeitungsgerätes 10 erstreckt, angeordnet.

Der den Unterlenkern 6 des Dreipunktkrafthebers 4 zugeordnete Hydraulikzylinder 8 ist als doppeltwirkender Zylinder ausgebildet. Somit kann also, wenn der Anschluß 21 des Hydraulikzylinders 8 mit Druck beaufschlagt wird, das Bodenbearbeitungsgerät 10 mit der Walze 11 von dem Boden 14 abgehoben werden. Wenn jedoch der Hydraulikanschluß 22 des Hydraulikzylinders 8 mit Druck beaufschlagt wird, so wird die Bodenwalze 11 in Richtung des Bodens 14 gedrückt, so daß die Bodenwalze 11 mit zusätzlichem Druck in Richtung des Bodens 14 zu beaufschlagen ist. Der Hydraulikzylinder 8 ist über ein auf dem Schlepper, welcher die Bestellkombination zieht, angeordnetes Steuergerät zu bedienen. Somit ist also das auf die Bodenwalze 11 und das Bodenbearbeitungsgerät 10 vom Tragrahmen 1 übertragbare Belastungsgewicht mittels einer vom Schleppersitz aus betätigbaren Fernbedienungsvorrichtung veränderbar. Dieses Steuergerät 23 kann auch mit einer elektronischen Regeleinrichtung 24 verbunden sein, so daß über eine elektronische Regeleinrichtung 24 das Steuergerät 23 bzw. der Hydraulikzylinder 8 entsprechend mit Druck beaufschlagbar ist, so daß über die elektronische Regeleinrichtung 24 das von dem Tragrahmen 1 auf die Walze 11 übertragbare Belastungsgewicht entsprechend der jeweils vorherrschenden Bodenverhältnisse variierbar ist. Auch kann Gewicht von der Bodenwalze 11 und dem Bodenbearbeitungsgerät 10 auf den Tragrahmen 1 und die Laufräder 2 übertragen werden, so daß die Walze 11 entlastet wird.

Die Bodenbearbeitungswerkzeuge 13 sind als nicht angetriebene Bodenbearbeitungszinken, wie beispielsweise Kultivarzinken ausgebildet. Anstelle der Kultivatorzinken 13 können auch eine Spatenrollegge oder verschiedene Bodenbearbeitungswerkzeuge in kombinierter Weise vorgesehen sein. Es ist jedoch auch möglich, die Bodenbearbeitungswerkzeuge als angetriebene Werkzeuge, beispielsweise einer Kreiselegge, Rüttelegge etc. auszubilden.
Auf der Rückseite des Tragrahmens 1 ist der Vorratsbehälter 16 für das Saatgut angeordnet. Im unteren Bereich des Vorratsbehälters 16 ist eine Dosiervorrichtung angeordnet, die das Saatgut über eine Schleuse in eine Förderleitung 17 einspeist. Diese Förderleitung 17 ist auf der einen Seite mit einem Gebläse und auf der anderen Seite mit einem Verteilerkopf 18 verbunden. Von dem Verteilerkopf 18 aus führen flexible Saatleitungen 19 zu hinter den Laufrädern 2 angeordneten Säscharen 20.

Die Säschare 20 sind mittels Gelenke an einem Scharrahmen 25 in aufrechter Ebene befestigt. In vorteilhafter Weise können zwischen den Säscharen 20 und dem Scharrahmen 25 die Säschare 20 in Richtung des Bodens belastbare Federn angeordnet sein. Der Scharrahmen 25 stützt sich auf eine durchgehende Bodenwalze 26, die in dem Scharrahmen 25 gelagert ist, ab. Der Scharrahmen 25 ist über eine Dreipunktkupplung 27 an dem Tragrahmen 1 angeordnet. Der Dreipunktkupplung 27 ist der doppeltwirkende Hydraulikzylinder 28 zugeordnet. Der Hydraulikzylinder 28 ist mittels der Leitungen 29 und 30 mit dem Steuergerät 31 verbunden. Der Hydraulikzylinder 28 wird über das Steuergerät 31 von der Regeleinrichtung 24 und/oder von einem Schlepperventil der Hydraulikanlage betätigt. Die Bodenwalze 26 ist hinter den Laufrädern 2 und vor den Säscharen 20 angeordnet. Die als Hydraulikzylinder 28 ausgebildete Druckerzeugungseinrichtung ist von der Steuer- und Regeleinrichtung 24 derart regelbar, daß das auf die Bodenwalze 26 vom Tragrahmen 1 unter Entlastung der Laufräder 2 übertragende Belastungsgewicht, vorzugsweise mittels einer vom Schleppersitz aus betätigbaren Fernbedienungsvorrichtung oder mittels einer elektronischen Regeleinrichtung 24 veränderbar ist.

Falls die Bodenwalze 26 als Keilringwalze ausgebildet ist, sind die Säschare 20 in den von den Kreilringen der Kreilringwalze 26 in den Boden gezogenen bzw. gedrückten Furchen angeordnet, so daß das Saatgut auf einem befestigten Bereich abgelegt wird.

Dadurch, daß die Bodenwalze 26 hinter den Laufrädern 2 angeordnet ist, ist sichergestellt, daß eine gleichmäßige Bodenverdichtung für das Saatgut ohne Erzeugung von Laufradspuren der Laufräder 2 erreichbar ist. Es ergibt sich also ein ebenes Saatbett ohne Spurrillen.

Der Vorratsbehälter 16 ist mittels Druckerfassungselementen 32, die Drucksensoren aufweisen, an dem Tragrahmen 1 angeordnet, so daß das Gewicht des Vorratsbehälters 16 ermittelbar ist. Diese Sensoren 32 bilden eine Wiegevorrichtung und übermitteln über die Leitungen 33 entsprechende Impulse an die Steuer- und Regeleinrichtung 24, so daß das Gewicht des Vorratsbehälters 16 ermittelbar ist. Hierbei kann durch eine entsprechende Eichung auch das Gewicht des sich im Vorratsbehälter 16 befindlichen Materials ermittelt werden. Die Wiegeeinrichtung 32 ist mit der elektronischen Regeleinrichtung 24 verbunden und zwar derart, daß bei sich ändernden Vorratsbehälterfüllgrad das auf die Laufräder 2 lastende Gewicht zumindest annähernd konstant bleibt. Hierbei wird dann über das Steuergerät 24 der Hydraulikzylinder 28 entsprechend angesteuert, so daß das auf die Laufräder 2 einwirkende Gewicht konstant gehalten wird.

Die Bodenwalzen 11 kann als Stabwalze, Zahnpackerwalze, Reifenpackerwalze, als Gußscheibenwalze und Keilringwalze etc. ausgebildet sein.

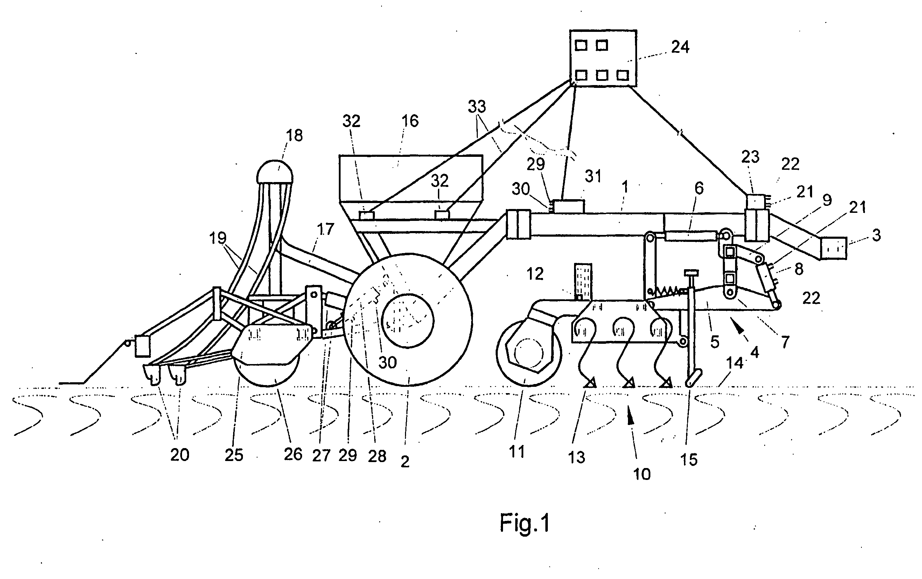

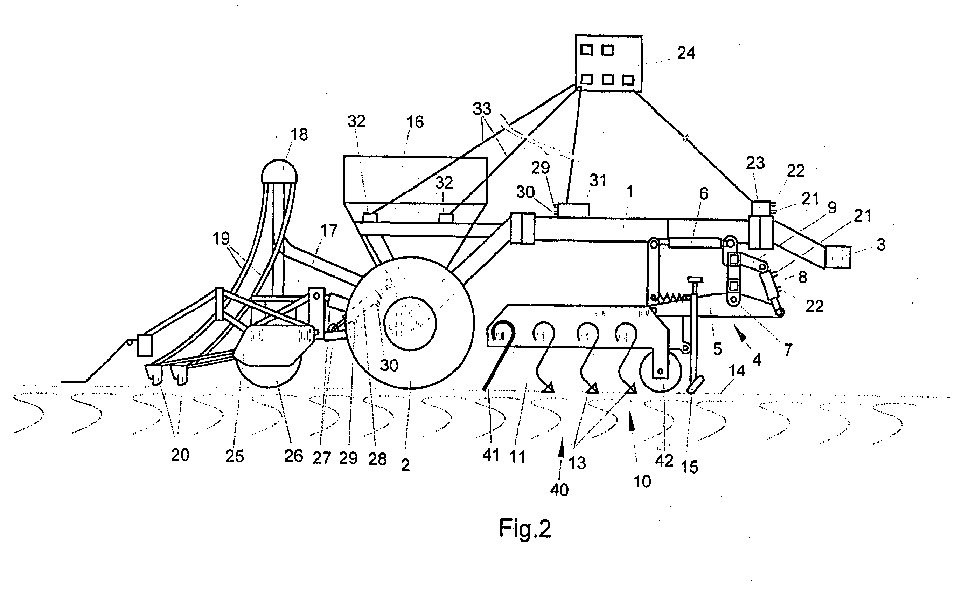

Das Ausführungsbeispiel gemäß Fig.2 unterscheidet sich von dem Ausführungsbeispiel gemäß Fig.1 dadurch, daß das Bodenbearbeitungsgerät 10 durch das Bodenbearbeitungsgerät 40 ersetzt ist. Das Bodenbearbeitungsgerät 40 ist mittels des Dreipunktkrafthebers 4 am Tragrahmen 1 angeordnet. Das Bodenbearbeitungsgerät 40 weist die als Kultivatorzinken 13 und Striegelzinken 41 ausgebildeten Bodenbearbeitungswerkzeuge auf. Vor den Kultivatorzinken 13 ist die Bodenwalze 42 und das Planierschild 15 angeordnet. Die Bodenwalze 42 ist gegenüber den Kultivatorzinken 13 und dem Striegel 41 in nicht dargestellter Weise in Höhenrichtung verstellbar, so daß unterschiedliche Eingriffstiefen der Kultivatorzinken 13 und des Striegel 41 in den Boden einstellbar sind.

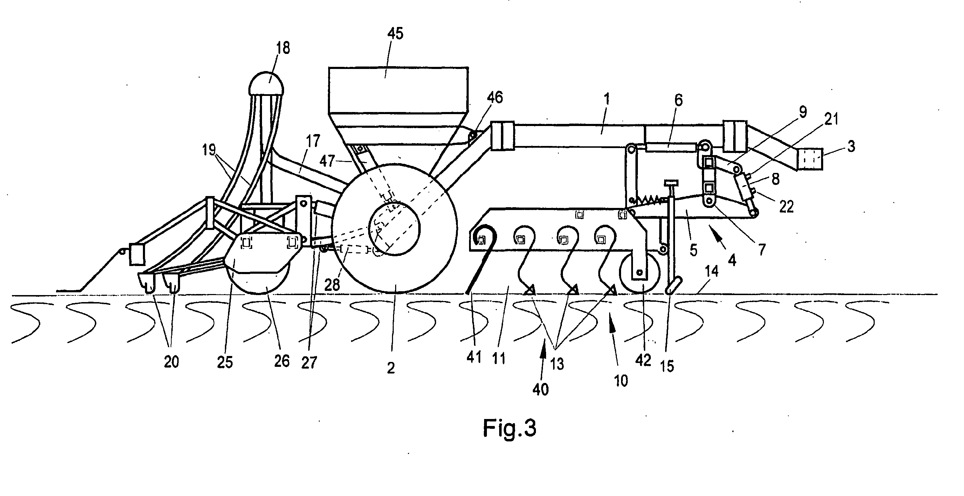

Die Bestellkombination gemäß Fig.3 weist den Tragrahmen 1 mit dem Fahrwerk 2 und der Zugdeichsel 3 auf. Im vorderen Bereich des Tragrahmens 1 ist der Dreipunktkraftheber 4 angeordnet. Der Dreipunktkraftheber 4 ist als parallelogrammartige Halterung ausgebildet. Der Dreipunktkraftheber 4 weist die beiden unteren Lenker 5 sowie den Oberlenker 6 auf. Die Unterlenker 5 sind über das Gelenk 7 nach vorn verlängert. Die Vorderseiten der unteren Lenker 5 sind mit einem Verbindungsbalken miteinander verbunden. An diesem Verbindungsbalken greift der Hydraulikzylinder 8 an. Der Hydraulikzylinder 8 stützt sich am Rahmen9 des Dreipunktkrafthebers 4, der an dem Tragrahmen 1 befestigt ist, ab. An dem Dreipunktkraftheber 4 ist das Bodenbearbeitungsgerät 10 mit der Nachlaufwalze 11 angeordnet. Die Nachlaufwalze 11 ist gegenüber dem Bodenbearbeitungsgerät 10 über die Höhenverstellungseinrichtung 12 in der Höhenlage gegenüber dem Bodenbearbeitungsgerät 10 einstellbar, so daß die Bodenwalze 11 die Eindringtiefe der Bodenbearbeitungswerkzeuge 13 des Bodenbearbeitungsgerätes 10 in den Boden 14 bestimmt. Die Bodenbearbeitungswerkzeuge 13 sind in drei Querreihen hintereinander angeordnet. Vor den Bodenbearbeitungswerkzeugen 13 ist ein in Höhenrichtung verstellbarer Planierbalken 15, der sich über die Arbeitsbreite des Bodenbearbeitungsgerätes 10 erstreckt, angeordnet.

Der den Unterlenkem 6 des Dreipunktkrafthebers 4 zugeordnete Hydraulikzylinder 8 ist als doppeltwirkender Zylinder ausgebildet. Somit kann also, wenn der Anschluß 21 des Hydraulikzylinders 8 mit Druck beaufschlagt wird, das Bodenbearbeitungsgerät 10 mit der Walze 11 von dem Boden 14 abgehoben werden. Wenn jedoch der Hydraulikanschluß 22 des Hydraulikzylinders 8 mit Druck beaufschlagt wird, so wird die Bodenwalze 11 in Richtung des Bodens 14 gedrückt, so daß die Bodenwalze 11 mit zusätzlichem Druck in Richtung des Bodens 14 zu beaufschlagen ist. Der Hydraulikzylinder 8 ist über ein auf dem Schlepper, welcher die Bestellkombination zieht, angeordnetes Steuergerät zu bedienen. Somit ist also das auf die Bodenwalze 11 und das Bodenbearbeitungsgerät 10 vom Tragrahmen 1 übertragbare Belastungsgewicht mittels einer vom Schleppersitz aus betätigbaren Fernbedienungsvorrichtung veränderbar.

Die Bodenbearbeitungswerkzeuge 13 sind als nicht angetriebene Bodenbearbeitungszinken, wie beispielsweise Kultivarzinken ausgebildet. Anstelle der Kultivatorzinken 13 können auch eine Spatenrollegge oder verschiedene Bodenbearbeitungswerkzeuge in kombinierter Weise vorgesehen sein. Es ist jedoch auch möglich, die Bodenbearbeitungswerkzeuge als angetriebene Werkzeuge, beispielsweise einer Kreiselegge, Rüttelegge etc. auszubilden.
Auf der Rückseite des Tragrahmens 1 ist der Vorratsbehälter 16 für das Saatgut angeordnet. Im unteren Bereich des Vorratsbehälters 16 ist eine Dosiervorrichtung angeordnet, die das Saatgut über eine Schleuse in eine Förderleitung 17 einspeist.

Diese Förderleitung 17 ist auf der einen Seite mit einem Gebläse und auf der anderen Seite mit einem Verteilerkopf 18 verbunden. Von dem Verteilerkopf 18 aus führen flexible Saatleitungen 19 zu hinter den Laufrädern 2 angeordneten Säscharen 20.

Die Säschare 20 sind mittels Gelenke an einem Scharrahmen 25 in aufrechter Ebene befestigt. In vorteilhafter Weise können zwischen den Säscharen 20 und dem Scharrahmen 25 die Säschare 20 in Richtung des Bodens belastbare Federn angeordnet sein. Der Scharrahmen 25 stützt sich auf eine durchgehende Bodenwalze 26, die in dem Scharrahmen 25 gelagert ist, ab. Der Scharrahmen 25 ist über eine Dreipunktkupplung 27 an dem Tragrahmen 1 angeordnet. Der Dreipunktkupplung 27 ist der doppeltwirkende Hydraulikzylinder 28 zugeordnet. Der Hydraulikzylinder 28 ist mittels der Leitungen 29 und 30 mit dem Steuergerät der Schlepperhydraulikanlage verbunden. Der Hydraulikzylinder 28 wird über das Steuergerät von der Schlepperhydraulikanlage betätigt. Die Bodenwalze 26 ist hinter den Laufrädern 2 und vor den Säscharen 20 angeordnet. Die als Hydraulikzylinder 28 ausgebildete Druckerzeugungseinrichtung ist von einer weiter unten beschriebenen hydraulischen Regeleinrichtung derart regelbar, daß das auf die Bodenwalze 26 vom Tragrahmen 1 unter Entlastung der Laufräder 2 übertragende Belastungsgewicht veränderbar ist.

Falls die Bodenwalze 26 als Keilringwalze ausgebildet ist, sind die Säschare 20 in den von den Kreilringen der Kreilringwalze 26 in den Boden gezogenen bzw. gedrückten Furchen angeordnet, so daß das Saatgut auf einem befestigten Bereich abgelegt wird.

Dadurch, daß die Bodenwalze 26 hinter den Laufrädern 2 angeordnet ist, ist sichergestellt, daß eine gleichmäßige Bodenverdichtung für das Saatgut ohne Erzeugung von Laufradspuren der Laufräder 2 erreichbar ist. Es ergibt sich also ein ebenes Saatbett ohne Spurrillen.

Der Vorratsbehälter 45 ist mittels der Gelenke 46 an dem Tragrahmen 1 aufgehängt. Auf seiner Rückseite wird der Vorratsbehälter 45 über die beiden Stützen 47, an deren unteren Ende 48 jeweils der Hydraulikzylinder 49 angeordnet ist, abgestützt. Die Hydraulikzylinder 49 dienen als Kraftmeßeinrichtung. Die Hydraulikzylinder 49 sind über die Leitungen 50 mit dem Druckspeicher 51 und den Hubzylindern 28 der Kuppeleinrichtung 27 verbunden. Desweiteren ist in der Leitung 30 das entsperrbare Rückschlagventil 52 angeordnet. Durch dieses System der hydraulischen Steuerung des Hubzylinders 28 wird das auf den Laufrädern 2 ruhende Maschinengewicht teilweise auf die Nachlaufwalze 26 über die Kuppeleinrichtung 27 übertragen, in dem durch den Hydraulikzylinder 28 die Bodenwalze 26 nach unten gedrückt wird. Durch diese hydraulischen Steuerung wird dem sich ändernden Gewicht in dem Vorratsbehälter 16 auf hydraulische Weise Rechnung getragen.

Die Funktionsweise ist folgende:
Der hydraulische Kreislauf, der den oder die Hydraulizylinder 28 der Kuppeleinrichtung 28 nach unten drückt, ist mit den beiden Hydraulikzylindern 49 gekoppelt, die den Stützen 47 des Behälters 16 zugeordnet sind. Über die Hydraulikzylinder 49 wird die Rückseite des Behälters 16 um einige mm angeordnet. Beim Anheben wird das Ventil 53 betätigt, das den Ölstrom stoppt und somit den Anhebevorgang beendet.
Ist der Behälter 16 leer, so benötigen die Hydraulikzylinder 49 nur einen geringen Druck, um das Anheben des Behälters 16 zu stoppen. Die Kraft am Hydraulikzylinder 28, der das Gewicht auf die Bodenwalze 26 überträgt, ist somit gering. Ist der Vorratsbehälter 16 voll, so wird ein größerer Druck benötigt und es wird mehr Gewicht auf die Bodenwalze 26 übertragen.
Um einen sicheren Betrieb der Säschare 20 an der Maschine zu gewährleisten, ist die Schwimmstellung in der Schlepperhydraulik, an welche dieses Hydrauliksystem über die Leitungen 29 und 30 an ein doppeltwirkendes Steuerventil angeschlossen ist, erforderlich. Aus diesem Grunde ist ein entsperrbares Rückschlagventil 52 in der Hydraulikleitung 30 angeordnet und vorgeschaltet, daß hierbei den freien Rücklauf der unter Druck stehenden Zylinderseite des Hydraulikzylinders 28 nicht erlaubt. Erst wenn sich der Druck auf der Hebeleitung 29 befindet, wird der Rücklauf freigegeben.

## Patentansprüche

1. Landwirtschaftliche Bestellkombination, bestehend aus einem Tragrahmen mit einem Laufräder aufweisenden Fahrwerk und einer Zugdeichsel, zumindest einem an dem Tragrahmen mittels Halterung angeordnetem Bodenbearbeitungsgerät mit am Rahmen befestigten Bodenbearbeitungswerkzeugen, in aufrechter Ebene an einem Scharrahmen hinter den Laufrädern angeordneten Säscharen und Bodenwalze, wobei der Bodenwalze zumindest eine die Bodenwalze in Richtung des Bodens belastende Druckerzeugungseinrichtung zugeordnet ist, **dadurch gekennzeichnet, dass** auf dem Tragrahmen (1), im Bereich oberhalb der Laufräder (2), ein Vorratsbehälter (16) angeordnet ist, daß dem Vorratsbehälter (16) eine Wiegeeinrichtung (32) zur Erfassung des Gewichtes des sich im Vorratsbehälter (16) befindlichen Materials zugeordnet ist, daß die Wiegeeinrichtung (32) mit einer den Druckerzeugungseinrichtung ansteuerenden elektronischen Regeleinrichtung (24) verbunden ist, und zwar derart, daß bei sich ändernden Vorratsbehälterfüllgrad das auf die Laufräder (2) lastende Gewicht zumindest annähernd konstant bleibt.

2. Bestellkombination nach Anspruch 1, **dadurch gekennzeichnet, daß** die Wiegeeinrichtung (49) ein hydraulisches Regelsystem (52, 53) aufweist.

## Revendications

1. Machine agricole combinée comprenant
un châssis porteur muni d'un châssis de roulement équipé de roues et d'un timon, au moins une machine de travail du sol installée sur le châssis porteur à l'aide de moyens de fixation, comportant des outils pour le travail du sol, fixés au châssis, des socs de charrue installés sur un cadre de charrue en aval des roues, dans le plan vertical, et un rouleau de compactage,
le rouleau de compactage ayant au moins une installation générant une poussée sollicitant le rouleau de compactage en direction du sol,
**caractérisée en ce que**
dans la zone située au-dessus des roues (2), le châssis porteur (1) comporte un réservoir d'alimentation (16) auquel est associée une installation de pesée (32) pour déterminer le poids de produit contenu dans le réservoir (16),
l'installation de pesée (32) est reliée à une installation électronique de régulation (24) commandant l'installation générant la poussée de façon que le poids appliqué aux roues (2) suivant le degré de remplissage variable du réservoir d'alimentation reste au moins approximativement constant.

2. Machine agricole combinée selon la revendication 1,
**caractérisée en ce que**
l'installation de pesée (49) comporte un système de régulation hydraulique (52, 53).

## Claims

1. Agricultural cultivating combination, comprising a supporting frame with a framework that includes running wheels and a towing bar, at least one ground cultivating device, which is disposed on the supporting frame by means of mounting support, with ground cultivating tools which are secured to the frame, sowing coulters, which are disposed in an upright plane on a coulter frame behind the running wheels, and ground roller, wherein there is associated with the ground roller at least one pressure generating device, which loads the ground roller in the direction of the ground, **characterised in that** on the supporting frame (1), in the region above the running wheels (2), there is disposed a hopper (16), **in that** a weighing device (32) for detecting the weight of the material situated in the hopper (16) is associated with the hopper (16), **in that** the weighing device (32) is connected to an electronic regulating device (24) which operates the pressure generating device in such a manner that when the filling level of the hopper changes, the weight loading the running wheels (2) remains at least approximately constant.

2. Cultivating combination according to claim 1, **characterised in that** the weighing device (49) includes a hydraulic regulating system (52, 53).
